(19) Europäisches Patentamt
European Patent Office
Office européen des brevets

(11) **EP 3 956 681 B1**

(12) **EUROPÄISCHE PATENTSCHRIFT**

(45) Veröffentlichungstag und Bekanntmachung des Hinweises auf die Patenterteilung:
**21.08.2024 Patentblatt 2024/34**

(21) Anmeldenummer: **20718642.0**

(22) Anmeldetag: **09.04.2020**

(51) Internationale Patentklassifikation (IPC):
**G01S 7/539** (2006.01) **G01S 15/931** (2020.01)
**G01S 15/88** (2006.01)

(52) Gemeinsame Patentklassifikation (CPC):
**G01S 15/931; G01S 7/539; G01S 15/88**

(86) Internationale Anmeldenummer:
**PCT/EP2020/060137**

(87) Internationale Veröffentlichungsnummer:
**WO 2020/212243 (22.10.2020 Gazette 2020/43)**

(54) **VERFAHREN UND VORRICHTUNG ZUM BEWERTEN EINER OBJEKTHÖHE MITTELS VON EINEM AN EINEM FAHRZEUG ANGEBRACHTEN ULTRASCHALLSENSOR EMPFANGENEN ULTRASCHALLSIGNALEN**

METHOD AND DEVICE FOR EVALUATING AN OBJECT HEIGHT BY MEANS OF ULTRASONIC SIGNALS RECEIVED BY AN ULTRASONIC SENSOR MOUNTED ON A VEHICLE

PROCÉDÉ ET DISPOSITIF D'ÉVALUATION D'UNE HAUTEUR D'OBJET AU MOYEN DE SIGNAUX ULTRASONORES REÇUS D'UN CAPTEUR À ULTRASONS MONTÉ SUR UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.04.2019 DE 102019205565**

(43) Veröffentlichungstag der Anmeldung:
**23.02.2022 Patentblatt 2022/08**

(73) Patentinhaber: **Robert Bosch GmbH**
**70442 Stuttgart (DE)**

(72) Erfinder:
• **MATTHIES, Christian**
**70191 Stuttgart (DE)**
• **SCHMIDT, Juergen**
**71106 Magstadt (DE)**
• **REIMANN, Tom**
**73266 Bissingen An Der Teck (DE)**
• **SCHUMANN, Michael**
**70597 Stuttgart (DE)**

(56) Entgegenhaltungen:
**EP-A1- 1 764 630     DE-A1- 102015 209 939**

**Beschreibung**

Die vorliegende Erfindung betrifft ein Verfahren und eine entsprechende Vorrichtung zum Bewerten einer Objekthöhe mittels von einem an einem Fahrzeug angebrachten Ultraschallsensor empfangenen Ultraschallsignalen während mehrerer aufeinanderfolgenden Messzyklen.

Stand der Technik

Aus dem Stand der Technik sind Fahrerassistenz-Systeme für Fahrzeuge bekannt, die jeweils ultraschallbasierte Fahrerassistenz-Funktionen bereitstellen. Ein solches Fahrerassistenz-System umfasst beispielsweise Fahrerassistenz-Funktionen, die beispielsweise eine Ein- beziehungsweise Ausparkunterstützung bereitstellen, die ein autonomes Ein- beziehungsweise Ausparken eines Fahrzeuges gewährleisten, wobei ein automatisches Eingreifen in eine Längs- und Querführung des entsprechenden Fahrzeugs erfolgt.

Aufgrund der zunehmenden Sicherheitsaspekte der zuvor genannten Fahrerassistenz-Funktionen, ist es von großer Bedeutung, dass ein von den Ultraschallsensoren des Fahrzeugs erfasstes Objekt dahingehend bewertet wird, welche Höhe es aufweist und ob es von dem Fahrzeug gefahrlos überfahren werden kann oder nicht.

Bei Objekten, die eine Ausdehnung in einer Richtung senkrecht zur Fahrbahnebene aufweisen, insbesondere bei mauerartigen Objekten werden von einem ausgesendeten Ultraschallsignal typischerweise mehrere Echosignale empfangen. Beispielsweise aus den Laufzeitunterschieden lässt sich prinzipiell eine Objekthöhe abschätzen. Gerade bei mauerartigen Objekten ergibt sich jedoch das Problem, dass ein Ultraschallsignal, das von der oberen Kante der Mauer zu dem Ultraschallsensor zurückreflektiert wird, aufgrund der Reflexionseigenschaften derartiger Objekte sehr viel schwächer ausgeprägt sein kann als ein Ultraschallsignal, das von der sogenannten Kehle, also dem Kontaktbereich des Objekts zum Boden zu dem Ultraschallsensor zurückreflektiert wird.

Aus dem Dokument DE 10 2012 211 293 A1 ist ein Verfahren zum Betrieb eines Umfelderfassungssystems eines Fahrzeugs mit zumindest einem Ultraschallsensor bekannt. Dabei sendet der Ultraschallsensor frequenzmodulierte Ultraschallsignale aus. Der Ultraschallsensor und/oder ein oder mehrere weitere Ultraschallsensoren empfangen ferner Ultraschallsignale der ausgesendeten Ultraschallsignale. Bei diesem Verfahren ist vorgesehen, dass die Ultraschallsignale gefiltert werden, so dass Boden-Ultraschallsignalanteile unterdrückt werden. Dabei werden aus den empfangenen Ultraschallsignalen eine Amplitudeninformation und eine Phaseninformation bestimmt. Ferner wird eine Bodenclutter-Hüllkurve in Abhängigkeit von der Zeit bestimmt. Auch wird eine Signalbewertungsfunktion ermittelt, die von der Amplitudeninformation, von der Phaseninformation und bevorzugt auch von der Bodenclutter-Hüllkurve abhängig ist. Aus demselben Dokument ist ferner ein entsprechendes Umfelderfassungssystem bekannt.

Aus der DE 10 2015 209 939 A1 ist ein Verfahren zum Bewerten einer Signifikanz eines Ultraschallsignals bekannt, wobei das Ultraschallsignal mittels eines an einem Fahrzeug angebrachten Ultraschallsensors während eines Messzyklus empfangen wird. Dabei wird die Signifikanz jedes empfangenen Ultraschallsignals anhand wenigstens eines Parameters bewertet, der Informationen umfasst, die in einem Empfangssignal enthalten sind. Das Empfangssignal wird von dem Ultraschallsensor aus von diesem während des Messzyklus empfangenen Ultraschallsignalen erzeugt. Die Signifikanz eines empfangenen Ultraschallsignals gibt eine Wahrscheinlichkeit an, mit der dieses aus Reflexion eines ausgesendeten Ultraschallsignals an wenigstens einem Objekt stammt.

Aus der EP 1 764 630 A1 ist ein Verfahren zum Bewerten einer Objekthöhe mittels von einem an einem Fahrzeug angeordneten Ultraschallsensor erfassten Ultraschallsignalen bekannt.

Offenbarung der Erfindung

Es wird ein Verfahren zum Bewerten einer Objekthöhe eines Objektes im Umfeld eines Fahrzeugs vorgeschlagen, wobei die Bewertung mittels Ultraschallsignalen durchgeführt wird, die von einem an dem Fahrzeug angeordneten Ultraschallsensor erfasst werden.

In einem Messzyklus wird ein erstes Ultraschallsignal als Kantenreflex oder als Direktläuferecho eines Objekts erfasst. Es wird daraus ein Erwartungsfenster für einen zugehörigen Kehlenreflex berechnet. Ein zweites Ultraschallsignal, das in dem Erwartungsfenster erfasst wird, wird als zu dem ersten Ultraschallsignal zugehörigen Kehlenreflex erkannt und es erfolgt ein Zusammenfassen des ersten Ultraschallsignals und des zweiten Ultraschallsignals zu einer Signalgruppe. Zu jedem Ultraschallsignal wird nun eine Signifikanz bestimmt. Durch Vergleich der Signifikanzen wird die Signalgruppe einer ersten Echogruppe oder einer zweiten Echogruppe zugeordnet.

Die Raten der Zuordnung zu der ersten Echogruppe und zu der zweiten Echogruppe werden über die bestimmte Anzahl von Messzyklen bestimmt und abhängig von der ersten Rate und der zweiten Rate erfolgt ein Bewerten der Objekthöhe.

Das erfindungsgemäße Verfahren weist die folgenden Schritte auf:
In einem Messzyklus erfolgt:

a. Erfassen eines ersten Ultraschallsignals als Kantenreflex oder als Direktläuferecho eines Objekts;

b. Berechnen eines Erwartungsfensters für einen zugehörigen Kehlenreflex;

c. Erfassen eines zweiten Ultraschallsignals;

d. wenn das zweite Ultraschallsignal in dem Erwartungsfenster erfasst wird, Identifikation des zweiten Ultraschallsignals als zu dem ersten Ultraschallsignal zugehörigen Kehlenreflex und Zusammenfassen des ersten Ultraschallsignals und des zweiten Ultraschallsignals zu einer Signalgruppe;

e. Bestimmen einer ersten Signifikanz des ersten Ultraschallsignals und Bestimmen einer zweiten Signifikanz des zweiten Ultraschallsignals, wobei die Signifikanz jedes erfassten Ultraschallsignals eine Wahrscheinlichkeit angibt, mit der das erfasste Ultraschallsignal eine Reflexion eines ausgesendeten Ultraschallsignals an wenigstens einem Objekt ist;

f. Zuordnung des Signalgruppe zu einem Objekt im Fahrzeugumfeld;

g. Vergleich der ersten Signifikanz und der zweiten Signifikanz und abhängig von dem Vergleich Zuordnung der Signalgruppe zu einer ersten Echogruppe oder einer zweiten Echogruppe;

Nach einer bestimmten Anzahl von Messzyklen erfolgt:

- Bestimmen einer ersten Rate der Zuordnung einer Signalgruppe zu der ersten Echogruppe über die bestimmte Anzahl von Messzyklen;
- Bestimmen einer zweiten Rate der Zuordnung einer Signalgruppe zu der zweiten Echogruppe über die bestimmte Anzahl von Messzyklen;
- Abhängig von der ersten Rate und der zweiten Rate ein Bewerten der Objekthöhe, dahingehend, ob das Objekt von dem Fahrzeug gefahrlos überfahren werden kann oder nicht.

Es wird zunächst davon ausgegangen, dass das Objekt, von dem die erfassten Ultraschallsignale reflektiert wurde, ein wandartiges Objekt ist. Wandartig bedeutet, dass das Objekt eine Erstreckung senkrecht zur Fahrbahnoberfläche und außerdem eine gewisse Erstreckung in einer Längsrichtung (im Gegensatz etwa zu einem Pfosten) aufweist. Beispiele für wandartige Objekte sind Mauern, Hauswände oder hohe Bordsteine.

Während eines Messzyklus erfolgt demnach zunächst ein Erfassen eines ersten Ultraschallsignals. Im Fall, dass das reflektierende Objekt eine Höhe aufweist, die kleiner ist als die Einbauhöhe des Sensors, stellt dieses Ultraschallsignal den Kantenreflex dar, Im Fall eines Objektes mit einer Höhe größer als die Einbauhöhe des Sensors, stellt das Ultraschallsignal das Direktläuferecho dar, also das auf direktem Weg von der Oberfläche des Objekts zugeworfene Echo. Es handelt sich in beiden Fällen um das zeitlich erste erfasste Echosignal, da die das Signal verursachenden Schallwellen in beiden Fällen den kürzesten Weg zum Sensor zurücklegen. Anschließend wird ein Erwartungsfenster für einen zugehörigen Kehlenreflex des Objekts berechnet. Bei dem Erwartungsfenster handelt es sich um ein definiertes Zeitintervall innerhalb des Messzyklus in dem unter der Annahme, dass es sich bei dem zuvor erfassten ersten Ultraschallsignal um einen Kantenreflex oder um ein sogenanntes Direktläuferecho handelt, der Kehlenreflex, also das Echosignal, das von dem Raumbereich in dem das Objekt auf dem Boden steht ausgeht, erwartet wird. Die Grenzen des Erwartungsfensters können sich dabei aus geometrischen Gegebenheiten des Ultraschallsensors wie beispielsweise der Einbauhöhe, und der Annahme, dass es sich bei dem Objekt um ein wandartiges Objekt handelt, berechnet werden. Wird nun ein zweites Ultraschallsignal erfasst, das in dem zuvor berechneten Erwartungsfenster für den Kehlenreflex liegt, so wird das zweite Ultraschallsignal als ein zu dem ersten Ultraschallsignal zugehöriger Kehlenreflex identifiziert und es erfolgt ein Zusammenfassen des ersten Ultraschallsignals und des zweiten Ultraschallsignals zu einer Signalgruppe.

Es wird weiterhin eine erste Signifikanz des ersten Ultraschallsignals und eine zweite Signifikanz des zweiten Ultraschallsignals bestimmt, wobei die Signifikanz jedes erfassten Ultraschallsignals eine Wahrscheinlichkeit angibt, mit der dieses aus Reflexion eines ausgesendeten Ultraschallsignals an wenigstens einem Objekt stammt.

Die Signalgruppe wird einem Objekt im Fahrzeugumfeld zugeordnet, beispielsweise mittels Trilateration. Weiterhin erfolgt ein Vergleich der ersten Signifikanz und der zweiten Signifikanz. Abhängig von dem Vergleich wird die Signalgruppe einer ersten Echogruppe oder einer zweiten Echogruppe zugeordnet. Die erste Echogruppe kann dabei so definiert sein, dass das Verhältnis und/oder der Unterschied zwischen der ersten Signifikanz und der zweiten Signifikanz auf ein Objekt mit einer Höhe größer als eine bestimmte Höhenschwelle hinweist. Die zweite Echogruppe kann so definiert sein, dass das Verhältnis und/oder der Unterschied zwischen der ersten Signifikanz und der zweiten Signifikanz auf ein Objekt mit einer Höhe kleiner als eine bestimmte Höhenschwelle hinweist.

Die zuvor beschriebenen Schritte a. bis g. werden für eine Mehrzahl von Messzyklen durchgeführt. Über eine bestimmte Anzahl x von Messzyklen wird eine erste Rate der Zuordnung einer Signalgruppe zu der ersten Echogruppe und eine zweite Rate der Zuordnung einer Signalgruppe zu der zweiten Echogruppe bestimmt. Beispielsweise können die erste und die zweite Rate über eine Anzahl von x = 16 Messzyklen bestimmt werden. Insbesondere werden die erste Rate und die zweite Rate fortlaufend (gleitend) über die letzten x Messzyklen bestimmt. Abhängig von der ersten Rate und der zweiten Rate erfolgt nunmehr ein Bewerten der Objekthöhe, dahingehend ob das Objekt von dem Fahrzeug gefahrlos überfahren werden kann oder nicht.

Es erfolgt somit eine gezielte Nutzung der geometrischen Beziehung zwischen dem ersten erfassten Ultraschallsignal (Kantenreflex oder Direktecho) und dem zweiten erfassten Ultraschallsignal (Kehle) von niedrigen Wänden unter der Berücksichtigung von Signifikanzverhältnissen bzw. Signifikanzunterschieden der erfassten Ultraschallsignale zueinander.

Erfindungsgemäß wird das Erwartungsfensters für den Kehlenreflex basierend auf einer Laufzeit des ersten Ultraschallsignals, der Einbauhöhe des Ultraschallsensors an dem Fahrzeug, gemessen über der Fahrbahnebene, und/oder einer Mindestobjekthöhe berechnet, wobei die Mindestobjekthöhe insbesondere fahrzeugtypabhängig festgelegt ist und insbesondere einen oberen Grenzwert für die Überfahrbarkeit eines Objektes angibt. Die Mindestobjekthöhe kann beispielsweise für einen typischen PKW 30 cm betragen. Die Einbauhöhe des Ultraschallsensors kann beispielsweise 45 cm betragen. Die Laufzeit des ersten Ultraschallsignals repräsentiert dabei die Entfernung des Ultraschallsensors von dem Objekt, insbesondere die kürzeste Entfernung.

In einer möglichen Ausführung der Erfindung wird das Erwartungsfenster so ausgelegt, dass die untere Grenze des Erwartungsfensters aus der festgelegten Mindestobjekthöhe errechnet wird und die obere Grenze des Erwartungsfensters unter der Annahme berechnet wird, dass ein Objekt mit einer Höhe größer oder gleich der Sensoreinbauhöhe vorliegt. Beide Größen sollten aufgrund von potentiell auftretenden Messfehlern mit einer Toleranz berechnet werden. Wenn das Objekt eine Höhe kleiner als die Sensoreinbauhöhe hat, liegt das Echo im Erwartungsfenster.

Aus dem Stand der Technik, insbesondere aus der DE 10 2015 209 939 A1 sind verschiedene Möglichkeiten bekannt, einem Ultraschallsignal eine Signifikanz zuzuordnen, die eine Wahrscheinlichkeit angibt, mit der das Ultraschallsignal eine Reflexion eines ausgesendeten Ultraschallsignals an wenigstens einem Objekt ist.

Bevorzugt wird eine Signifikanz des ersten Ultraschallsignals und/oder eine Signifikanz des zweiten Ultraschallsignals anhand wenigstens eines Parameters bestimmt, der Informationen umfasst, die in einem Empfangssignal enthalten sind, insbesondere einer Amplitude und/oder einem Korrelationsfaktor. Das Empfangssignal wird hierbei von dem Ultraschallsensor aus von diesem während des Messzyklus empfangenen Ultraschallsignalen erzeugt.

Die Signifikanz wird insbesondere bestimmt durch:
Einteilen eines Raumbereiches, der sich von dem Ultraschallsensor bis zu einer maximalen Reichweite des Ultraschallsensors erstreckt, in mehrere kontinuierliche und aufeinander folgende Teilbereiche, und Auswählen des wenigstens einen zum Bewerten der Signifikanz jedes empfangenen Ultraschallsignals zu verwendenden Parameters aus einer vordefinierten Parametergruppe in Abhängigkeit von einer Positionierung des Teilbereichs, in dem das entsprechende Ultraschallsignal entstanden ist.

Besonders bevorzugt wird die Signifikanz jedes empfangenen Ultraschallsignals mittels einer Signifikanzskala mit mehreren diskreten Signifikanzstufen bewertet, wobei das Bestimmen der Signifikanz des ersten Ultraschallsignals und/oder der Signifikanz des zweiten Ultraschallsignals erfolgt, indem dem Ultraschallsignal eine bestimmte Signifikanzstufe zugeordnet wird.

Insbesondere sind hierbei vier Signifikanzstufen vorgesehen, die eine erste Signifikanzstufe "niedrig", eine zweite Signifikanzstufe "mittel", eine dritte Signifikanzstufe "hoch" und eine vierte Signifikanzstufe "sehr hoch" umfassen, wobei der Signifikanzstufe "niedrig" eine geringe Wahrscheinlichkeit entspricht, dass ein Ultraschallsignal aus einer Reflexion eines ausgesendeten Ultraschallsignals an wenigstens einem Objekt stammt, wobei der Signifikanzstufe "mittel" eine mittelgroße Wahrscheinlichkeit entspricht, dass ein Ultraschallsignal aus einer Reflexion eines ausgesendeten Ultraschallsignals an wenigstens einem Objekt stammt, wobei der Signifikanzstufe "hoch" eine hohe Wahrscheinlichkeit entspricht, dass ein Ultraschallsignal aus einer Reflexion eines ausgesendeten Ultraschallsignals an wenigstens einem Objekt stammt, und wobei der Signifikanzstufe "sehr hoch" eine sehr hohe Wahrscheinlichkeit entspricht, dass ein Ultraschallsignal aus einer Reflexion eines ausgesendeten Ultraschallsignals an wenigstens einem Objekt stammt.

Beispielsweise können die Signifikanzstufen den folgenden Wahrscheinlichkeiten entsprechen:

Niedrig: 30 bis 50 %
Mittel: 51 bis 70%
Hoch: 71 bis 90%
Sehr hoch: 91 bis 100%

Weitere Möglichkeiten und Ausführungsbeispiele zur Bestimmung und Bewertung einer Signifikanz eines erfassten Ultraschallsignals ergeben sich aus der DE 10 2015 209 939 A1.

In einer bevorzugten Ausführung der Erfindung wird eine Signalgruppe umfassend ein erstes Ultraschallsignal und ein zweites Ultraschallsignal einer ersten Echogruppe zugeordnet, wenn der Unterschied zwischen der ersten Signifikanz und der zweiten Signifikanz gering ist, insbesondere, wenn beide Ultraschallsignale dieselbe Signifikanzstufe aufweisen, oder wenn das erste Ultraschallsignal eine sehr hohe Signifikanz aufweist, insbesondere die Signifikanzstufe "sehr hoch". Die Zuordnung der Signalgruppe zu der ersten Echogruppe weist auf ein eher hohes Objekt hin.

Weiter bevorzugt wird eine Signalgruppe umfassend ein erstes Ultraschallsignal und ein zweites Ultraschallsignal einer zweiten Echogruppe zugeordnet, wenn das erste Ultraschallsignal eine geringe Signifikanz aufweist, insbesondere die Signifikanzstufe "niedrig" und das zweite Ultraschallsignal eine im Vergleich zum ersten Ultraschallsignal hohe Signifikanz aufweist, insbesondere eine der Signifikanzstufen "hoch" oder "sehr hoch". Die Zuordnung der Signalgruppe zu der ersten Echogruppe weist auf ein eher niedriges Objekt hin.

In einem bevorzugten Ausführungsbeispiel der Erfindung wird die Objekthöhe bewertet, indem die bestimmte erste Rate der Zuordnung einer Signalgruppe zu der ersten Echogruppe mit einem ersten Schwellenwert verglichen wird. Zusätzlich oder alternativ wird die bestimmte zweite Rate der Zuordnung einer Signalgruppe zu der zweiten Echogruppe mit einem zweiten Schwellenwert verglichen wird. Zusätzlich oder alternativ kann außerdem die Summe der ersten Rate und der zweiten Rate mit einem dritten Schwellenwert verglichen werden. Dabei ist bevorzugt der dritte Schwellenwert bevorzugt größer als der erste Schwellenwert und größer als der zweite Schwellenwert. Damit wird dem Umstand Rechnung getragen, dass auch in den häufigen Fällen in denen alle Messungen dasselbe Objekt betreffen, für beide Echogruppen Raten größer Null gemessen werden, was darin begründet ist, dass je nach Betrachtungswinkel die Echoamplituden und damit die Signifikanzen variieren können. Durch den Wechsel der Echogruppe einzelner Signalgruppen fehlen diese nun der entsprechenden anderen Echogruppe und die notwendige Rate zur Überschreitung der Schwelle wird gegebenenfalls nicht erreicht. Aus diesem Grund wird bevorzugt auch die Summe beider Raten gezählt, wobei der entsprechende dritte Schwellenwert höher gewählt wird, als die ersten und zweiten Schwellenwerte, um zu vermeiden, dass falsche Bewertungsergebnisse (False Positives) erzeugt werden.

Insbesondere stark strukturierte wandartige Objekte, wie beispielsweise Mauern können auch mehr als zwei Echosignale liefern. Vorteilhaft ist, wenn in diesem Fall mehr als ein zweites Ultraschallsignal mit dem ersten Ultraschallsignal zu einer Signalgruppe zusammengefasst werden, wobei mindestens das zeitlich zuletzt erfasste zweite Ultraschallsignal der Gruppe in dem Erwartungsfenster liegen soll. Bei der Zuordnung einer solchen Signalgruppe zu einer der Echogruppen können die Signifikanzen aller in der Signalgruppe enthaltenen Ultraschallsignale bewertet und verglichen werden.

Wird das Objekt als ein Objekt bewertet, das höher als die festgelegte Mindestobjekthöhe von beispielsweise 30 cm ist, so kann eine Warnung ausgelöst werden.

Bevorzugt erfolgt ein von der ersten Rate und der zweiten Rate abhängiges Bewerten der Objekthöhe nur, wenn sich das Fahrzeug bewegt. Alternativ können bei einer Messung im Stillstand des Fahrzeugs höhere Bewertungsschwellwerte für den ersten Schwellenwert und/oder den zweiten Schwellenwert und/oder den dritten Schwellenwert bei der Bewertung angesetzt werden. Damit werden fehlerhafte Bewertungen der Objekthöhe verhindert. Nach einem zweiten Aspekt der Erfindung wird ein Ultraschallsensorsystem für ein Fahrzeug vorgeschlagen, welches mindestens einen Ultraschallsensor, der ausgebildet ist, Ultraschallsignale auszusenden und an einem Objekt reflektierte Ultraschallsignale der ausgesendeten Ultraschallsignale zu erfassen und eine Recheneinheit umfasst, die ausgebildet ist, ein wie oben beschrieben ausgebildetes Verfahren zum Bewerten einer Objekthöhe mittels der von dem Ultraschallsensor erfassten Ultraschallsignale durchzuführen.

Nach einem dritten Aspekt der Erfindung wird ein Computerprogramm vorgeschlagen, umfassend Programmcode zur Durchführung des erfindungsgemäßen Verfahrens, wenn das Computerprogramm auf der Recheneinheit des Ultraschallsensorsystems nach dem zweiten Aspekt ausgeführt wird. Die Erfindung erlaubt eine robuste Klassifikation von nicht überfahrbaren bodenständigen Objekten wie z.B. kleinen Stützmauern oder Wänden, insbesondere mit Höhen unterhalb der Sensoreinbauhöhe, und hilft damit zuverlässig, Schäden am Fahrzeug zu vermeiden.

Kurzbeschreibung der Figuren

Unter Bezugnahme auf die beigefügten Figuren werden Ausführungsformen der Erfindung im Detail beschrieben.

Figur 1 zeigt jeweils in Abhängigkeit von einem Abstand zu einem Ultraschallsensor dargestellte Verläufe eines während eines Messzyklus vorkommenden Empfangssignals des Ultraschallsignals und einer in dem Empfangssignal enthaltenen Phaseninformation.

Figur 2 zeigt schematisch ein Beispiel für eine Anordnung eines Ultraschallsensors an einem Fahrzeug bei der Annäherung an ein wandartiges Objekt.

Figur 3 stellt erste und zweite Ultraschallsignalen verschiedener Messzyklen dar.

Figur 4 stellt ein Verfahren gemäß einem Ausführungsbeispiel der Erfindung in Form eines Ablaufdiagrammes dar.

Bevorzugte Ausführungen der Erfindung

In der nachfolgenden Beschreibung der Ausführungsbeispiele der Erfindung werden gleiche Elemente mit gleichen Bezugszeichen bezeichnet, wobei auf eine wiederholte Beschreibung dieser Elemente gegebenenfalls verzichtet wird. Die Figuren stellen den Gegenstand der Erfindung nur schematisch dar.

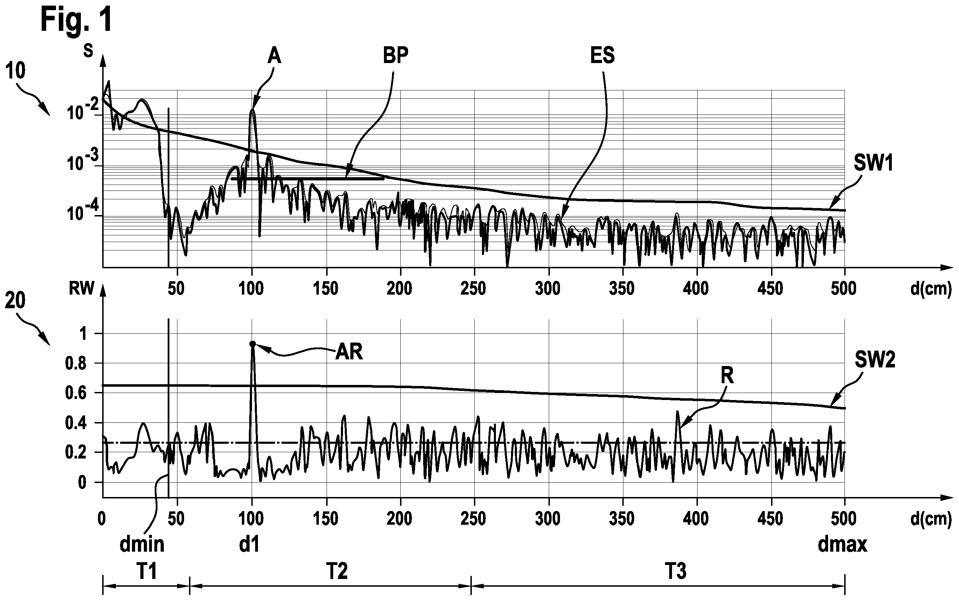

Eine gemäß einer ersten Ausführungsform der Erfindung durchzuführende Bewertung einer Signifikanz eines jeden mittels eines an einem Fahrzeug angebrachten Ultraschallsensors während eines Messzyklus empfangenen Ultraschallsignals wird in Zusammenhang mit der Figur 1 beschrieben. Dabei gibt die Signifikanz jedes empfangenen Ultraschallsignals eine Wahrscheinlichkeit an, mit der dieses aus Reflexion eines mittels des Ultraschallsensors zu einem Beginn des Messzyklus ausgesendeten Ultraschallsignals an wenigstens einem Objekt stammt. Das wenigstens eine Objekt befindet sich in einer Umgebung des Fahrzeuges. Jedes empfangene Ultraschallsignal, das aus Reflexion des ausgesendeten Ultraschallsignals an dem wenigstens einen Objekt stammt, wird im Folgenden auch als Objektechosignal bezeichnet.

Figur 1 umfasst ein Diagramm 10, welches einen Verlauf einer Signalstärke eines während des Messzyklus vorkommenden Empfangssignals ES des Ultraschallsensors in Abhängigkeit von einem Abstand zu dem Ultraschallsensor zeigt. Dabei erstreckt sich ein Abstandswertbereich des Abstandes zum Ultraschallsensor von einem minimalen Abstandswert von Null bis zu einem maximalen Abstandswert dmax. Der maximale Abstandwert dmax stimmt dabei mit einem Wert dmax einer maximalen Reichweite des Ultraschallsensors überein. Das Empfangssignal ES wird von dem Ultraschallsensor aus von diesem während des Messzyklus empfangenen Ultraschallsignalen erzeugt. Mittels des Empfangssignals ES wird eine Amplitude A des Empfangssignals in Abhängigkeit von dem Abstand zum Ultraschallsensor bestimmt.

Figur 1 umfasst ferner ein Diagramm 20, welches einen Verlauf einer in dem Empfangssignal ES enthaltene Phaseninformation R in Abhängigkeit von dem Abstand zum Ultraschallsensor zeigt. Zum Erzeugen eines Korrelationssignals wird das Empfangssignal ES mit einer Filterfunktion eines Optimalfilters korreliert. Die Phaseninformation R stimmt dabei mit einem Korrelationsfaktor R überein, der mittels des Korrelationssignals in Abhängigkeit von dem Abstand zum Ultraschalsensor bestimmt wird. Der Korrelationsfaktor R gibt eine Phasenkorrelation zwischen jedem empfangenen Ultraschallsignal und dem ausgesendeten Ultraschallsignal an und weist zwischen 0 und 1 liegende Werte auf. Anders ausgedrückt ist der Korrelationsfaktor R ein Maß für die Ähnlichkeit zwischen jedem empfangenen Ultraschallsignal und der Filterfunktion des Optimalfilters.

In der Figur 1 wird eine erste Achse, die einheitslose Werte angibt, die die mittels einer vordefinierten Normierungsgröße normierte Signalstärke des Empfangssignals ES aufweisen kann, mit S bezeichnet. In der Figur 1 wird eine zweite Achse, die Phaseninformationswerte angibt, die die Phaseninformation R aufweisen kann, mit RW bezeichnet. In der Figur 1 wird eine dritte Achse, die in Zentimetern angegebene Abstandswerte angibt, die der Abstand zum Ultraschallsensor aufweisen kann, mit d bezeichnet.

In der Figur 1 sind auch ein Wert dmin einer minimalen Reichweite des Ultraschallsensors und der Wert dmax der maximalen Reichweite des Ultraschallsensors eingetragen.

Gemäß der ersten Ausführungsform wird ein Raumbereich, der sich von dem Ultraschalsensor bis zu der maximalen Reichweite des Ultraschallsensors erstreckt, in einem ersten Teilbereich T1, einen zweiten Teilbereich T2 und einen dritten Teilbereich T3 eingeteilt. Die drei Teilbereiche T1, T2, T3 sind jeweils kontinuierlich und folgen unmittelbar aufeinander. Dabei grenzt der erste Teilbereich T1 unmittelbar an den Ultraschallsensor an. Ferner erstreckt sich der dritte Teilbereich T3 bis zu der maximalen Reichweite des Ultraschallsensors.

Gemäß der ersten Ausführungsform wird eine vordefinierte Parametergruppe mit drei Parametern A, R, A/BP verwendet. Dabei stimmt ein erster Parameter A der vordefinierten Parametergruppe mit der von dem Abstand zum Ultraschallsensor abhängigen Amplitude A des Empfangssignals ES überein. Auch stimmt ein zweiter Parameter R der vordefinierten Parametergruppe mit der von dem Abstand zum Ultraschallsensor abhängigen Phaseninformation R überein. Ferner stimmt ein dritter Parameter A/BP der vordefinierten Parametergruppe mit einem Quotienten zwischen dem ersten Parameter A und einem Bodenclutter-Pegel BP des Empfangssignals ES überein. Der Bodenclutter-Pegel BP verändert sich während eines Messzyklus nicht und wird anhand einer in einem vordefinierten Abschnitt des Empfangssignals ES vorkommenden Signalstärke oder Amplitude des Empfangssignals ES bestimmt. Der vordefinierte Abschnitt resultiert aus einem Empfang von Ultraschallsignalen, die aus Reflexion des ausgesendeten Ultraschallsignals an einem Boden stammen, auf dem sich das Fahrzeug befindet.

Gemäß der ersten Ausführungsform wird für einen jeden Teilbereich T1, T2, T3 der drei Teilbereiche T1, T2, T3 des Raumbereiches wenigstens ein Parameter A, R, A/BP der vordefinierten Parametergruppe zum Bewerten der Signifikanz jedes empfangenen Ultraschallsignals, das in dem entsprechenden Teilbereich T1, T2, T3 des Raumbereiches entstanden ist, ausgewählt. Gemäß der ersten Ausführungsform wird ferner ein für einen Teilbereich T1, T2, T3 der drei Teilbereiche T1, T2, T3 des Raumbereiches gültiger Parameterwertbereich eines jeden für den entsprechenden Teilbereich ausgewählten Parameters A, R, A/BP der vordefinierten Parametergruppe in einem ersten, zweiten, dritten und vierten Teilbereich eingeteilt. Dies wird für einen jeden Teilbereich T1, T2, T3 der drei Teilbereiche vorgenommen.

Die vier Teilbereiche jedes Parameterwertbereichs sind jeweils kontinuierlich und folgen unmittelbar nacheinander. Ferner werden Parameterwerte jedes Parameterwertbereichs mittels einer und derselben Parameterwertskala mit einer ersten, zweiten, dritten und vierten Parameterwertstufe bewertet. Dabei wird die erste Parameterwertstufe Parameterwerten des ersten Teilbereichs jedes Parameterwertbereichs zugeordnet. Dadurch werden die Parameterwerte des ersten Teilbereichs jedes Parameterwertbereichs jeweils als "niedrig" eingestuft. Ferner wird die zweite Parameterwertstufe Parameterwerten des zweiten Teilbereichs jedes Parameterwertbereichs zugeordnet. Dadurch werden die Parameterwerte des zweiten Teilbereichs jedes Parameterwertbereichs jeweils als "mittel" eingestuft. Auch wird die dritte Parameterwertstufe Parameterwerten des dritten Teilbereichs jedes Parameterwertbereichs zugeordnet. Dadurch werden die Parameterwerte des dritten Teilbereichs jedes Parameterwertbereichs jeweils, als "hoch" eingestuft. Ferner wird die vierte Parameterwertstufe Parameterwerten des vierten Teilbereichs jedes Parameterwertbereichs zugeordnet. Dadurch werden die Parameterwerte des vierten Teilbereichs jedes Parameterwertbereichs jeweils als "sehr hoch" eingestuft.

Gemäß der ersten Ausführungsform der Erfindung wird ferner die Signifikanz jedes empfangenen Ultraschallsignals mittels einer Signifikanzskala mit einer ersten, zweiten, dritten und vierten Signifikanzstufe bewertet. Dabei wird eine Signifikanz erster Signifikanzstufe als "niedrig" eingestuft. Ferner wird eine Signifikanz zweiter Signifikanzstufe als "mittel" eingestuft. Auch wird eine Signifikanz dritter Signifikanzstufe als "hoch" eingestuft. Weiterhin wird eine Signifikanz vierter Signifikanzstufe als "sehr hoch" eingestuft.

Gemäß der ersten Ausführungsform werden der erste Parameter A und/oder der zweite Parameter R zum Bewerten der Signifikanz jedes empfangenen Ultraschallsignals ausgewählt, das in dem ersten Teilbereich T1 des Raumbereiches entstanden ist. Im Folgenden wird jedes empfangene Ultraschallsignal, das in dem ersten Teilbereich T1 des Raumbereiches entstanden ist, jeweils auch als ein erstes Ultraschallsignal bezeichnet. Dabei wird die Signifikanz jedes ersten Ultraschallsignals als "sehr hoch" eingestuft, wenn beim Empfang dieses der Parameterwert des ersten Parameters A oder des zweiten Parameters R als "sehr hoch" eingestuft wird. Ferner wird die Signifikanz jedes ersten Ultraschallsignals als "hoch" eingestuft, wenn beim Empfang dieses der Parameterwert des ersten Parameters A und des zweiten Parameters R als "hoch" eingestuft wird. Auch wird die Signifikanz jedes ersten Ultraschallsignals als "mittel" eingestuft, wenn beim Empfang dieses der Parameterwert des ersten Parameters A als "mittel" und der Parameterwert des zweiten Parameters R als "hoch", mittel oder "niedrig" eingestuft wird. Weiterhin wird die Signifikanz jedes ersten empfangenen Ultraschallsignals als "niedrig" eingestuft, wenn beim Empfang dieses der Parameterwert des ersten Parameters A als "niedrig" und der Parameterwert des zweiten Parameters R als "hoch" oder "mittel" oder "niedrig" eingestuft wird.

Gemäß der ersten Ausführungsform werden der zweite Parameter R und/oder der dritte Parameter A/BP zum Bewerten der Signifikanz jedes empfangenen Ultraschallsignals ausgewählt, das in dem zweiten Teilbereich T2 des Raumbereiches entstanden ist. Im Folgenden wird jedes empfangene Ultraschallsignal, das in dem zweiten Teilbereich T2 des Raumbereiches entstanden ist, jeweils auch als ein zweites Ultraschallsignal bezeichnet. Dabei wird die Signifikanz jedes zweiten Ultraschallsignals als "sehr hoch" eingestuft, wenn beim Empfang dieses der Parameterwert des zweien Parameters R oder des dritten Parameters A/BP als "sehr hoch" eingestuft wird. Ferner wird die Signifikanz jedes zweiten Ultraschallsignals als "hoch" eingestuft, wenn beim Empfang dieses der Parameterwert des zweiten Parameters R als "hoch" oder "mittel" und der Parameterwert des dritten Parameters A/BP als "hoch" eingestuft wird. Auch wird die Signifikanz jedes zweiten Ultraschallsignals als "mittel" eingestuft, wenn beim Empfang dieses der Parameterwert des zweiten Parameters R als "mittel" und der Parameterwert des dritten Parameters A/BP als "mittel" oder "niedrig" eingestuft wird. Weiterhin wird die Signifikanz jedes zweiten Ultraschallsignals als "niedrig" eingestuft, wenn beim Empfang dieses der Parameterwert des zweiten Parameters R als "niedrig" und der Parameterwert des dritten Parameters A/BP als "hoch" oder "mittel" oder "niedrig" eingestuft wird.

Gemäß der ersten Ausführungsform wird der zweite Parameter R zum Bewerten der Signifikanz jedes empfangenen Ultraschallsignals ausgewählt, das in dem dritten Teilbereich T3 des Raumbereiches entstanden ist. Im Folgenden wird jedes empfangene Ultraschallsignal, das in dem dritten Teilbereich T3 des Raumbereiches entstanden ist, jeweils auch als ein drittes Ultraschallsignal bezeichnet. Dabei wird die Signifikanz jedes dritten Ultraschallsignals als "sehr hoch" eingestuft, wenn beim Empfang dieses der Parameterwert des zweien Parameters R als "sehr hoch" eingestuft wird. Ferner wird die Signifikanz jedes dritten Ultraschallsignals als "hoch" eingestuft, wenn beim Empfang dieses der Parameterwert des zweiten Parameters R als "hoch" eingestuft wird. Auch wird die Signifikanz jedes dritten Ultraschallsignals als "mittel" eingestuft, wenn beim Empfang dieses der Parameterwert des zweiten Parameters R als "mittel" eingestuft wird. Weiterhin wird die Signifikanz jedes dritten Ultraschallsignals als "niedrig" eingestuft, wenn beim Empfang dieses der Parameterwert des zweiten Parameters R als "niedrig" eingestuft wird.

In der Figur 1 werden zusätzlich auch der Verlauf eines ersten Schwellenwerts SW1 und der Verlauf eines zweiten Schwellenwerts SW2 dargestellt. Dabei wird der erste Schwellenwert SW1 beim Empfang jedes Objektechosignals durch das Empfangssignal ES überschritten. Auch wird der zweite Schwellenwert SW2 beim Empfang jedes Objektechosignals durch die Phaseninformation R überschritten. Aus der Figur 1 ist ersichtlich, dass während des Messzyklus ein erstes Objektechosignal empfangen wird, das in dem zweiten Teilbereich T2 des Raumbereiches entstanden ist. Aus der Figur 1 ist auch ersichtlich, dass sich ein Entstehungsort des ersten Objektechosignals in einem Abstand zum Ultraschallsensor befindet, der einen ersten Abstandwert d1 von etwa 100 cm aufweist. Aus der Figur 1 ist ferner ersichtlich, dass ein erster Amplitudenwert, der von der Amplitude A des Empfangssignals ES bei dem ersten Abstandswert d1 angenommen wird, über dem ersten Schwellenwert SW1 liegt und deutlich größer als der Bodenclutter-Pegel BP ist. Dabei wird ein Parameterwert, der von dem dritten Parameter A/BP bei dem ersten Abstandswert d1 angenommen wird, als Quotient zwischen dem ersten Amplitudenwert und dem Bodenclutter-Pegel BP berechnet und als "hoch" eingestuft. Aus der Figur 1 ist weiterhin ersichtlich, dass ein erster Phaseninformationswert, der von einer Amplitude AR des zweiten Parameters R bei dem ersten Abstandswert d1 angenommen wird, über den zweiten Schwellenwert SW2 liegt und größer als 0,9 ist. Der erste Phasenformationswert wird als "hoch" eingestuft. Das bedeutet, dass gemäß der ersten Ausführungsform die Signifikanz des ersten Objektechosignals als "hoch" eingestuft wird.

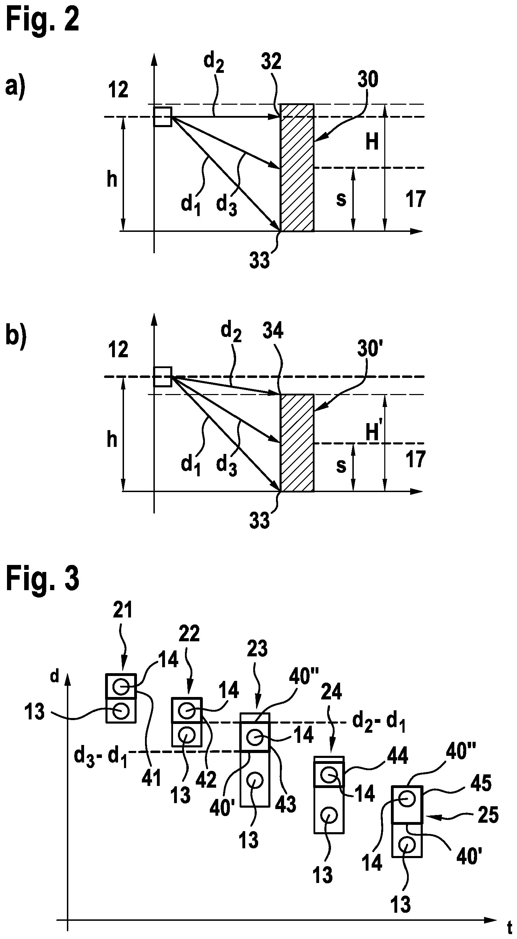

In Figur 2 a) ist schematisch ein Ultraschallsensor 12 abgebildet. Der Ultraschallsensor 12 ist in einer Einbauhöhe h über der Fahrbahnebene 17, beispielsweise am Heck eines Fahrzeugs (nicht dargestellt) angeordnet. Im Umfeld des Fahrzeugs befindet sich ein wandartiges Objekt 30, beispielsweise eine niedrige Mauer. Das Objekt weist in diesem Beispiel eine Höhe H auf, die größer ist, als die Einbauhöhe h des Sensors 12.

Zu Beginn eines Messzyklus sendet der Ultraschallsensor 12 ein Ultraschallsignal aus. Das Ultraschallsignal wird an dem Objekt 30 reflektiert und es werden reflektierte Ultraschallsignale von dem Ultraschallsensor 12 erfasst. Das zeitlich zuerst erfasste Ultraschallsignal entspricht dem Reflex von dem Ultraschallsensor 12 direkt gegenüberliegenden Punkt 32 auf der Oberfläche des Objekts 30. Der Punkt 32 weist die kürzeste Distanz $d_2$ zu dem Ultraschallsensor 12 auf. Daraus folgt, dass das von diesem Punkt ausgehende reflektierte Ultraschallsignal die kürzeste Laufzeit aufweist. Dieses Ultraschallsignal wird auch als Direktläufersignal oder als Direktecho bezeichnet.

Unter dem sogenannten Kehlenreflex wird das von dem Kehlenbereich 33, also dem Bereich an dem die wandartige Struktur des Objekts 30 auf der Bodenfläche steht und einen im Wesentlichen rechtwinklig geformten Reflexionsbereich ausbildet. Der Kehlenreflex wird zeitlich später empfangen als das Direktecho, da die Distanz $d_1$ zwischen dem Ultraschallsensor 12 und dem Kehlenbereich 33 größer ist als die Distanz $d_2$ zwischen dem Ultraschallsensor 12 und dem dem Ultraschallsensor 12 direkt gegenüberliegenden Punkt 32.

Die Einbauhöhe h des Ultraschallsensor 12 ist bekannt. Außerdem ist die Mindestobjekthöhe S bekannt, ab der ein Objekt nicht mehr als überfahrbar bewertet wird. Aus geometrischen Überlegungen kann ausgehend von dem Erfassungszeitpunkt des Direktläuferechos ein Erwartungsfenster für die Erfassung des Kehlenreflexes berechnet werden. Wird innerhalb dieses Erwartungsfensters tatsächlich ein zweites Ultraschallsignal empfangen, so kann dieses mit dem ersten Ultraschallsignal zu einer Signalgruppe zusammengefasst werden.

In Figur 2 b) ist schematisch ein Ultraschallsensor 12 abgebildet. Der Ultraschallsensor 12 ist wiederum in einer Einbauhöhe h über der Fahrbahnebene 17, beispielsweise am Heck eines Fahrzeugs (nicht dargestellt) angeordnet. Im Umfeld des Fahrzeugs befindet sich ein wandartiges Objekt 30', beispielsweise eine niedrige Mauer. Das Objekt weist in diesem Beispiel eine Höhe H' auf, die kleiner ist, als die Einbauhöhe des Sensors 12, aber größer ist, als die Höhenschwelle s, die eine Objekthöhe angibt bei deren Überschreiten ein Objekt als nicht mehr überfahrbar bewertet wird.

Zu Beginn eines Messzyklus sendet der Ultraschallsensor 12 ein Ultraschallsignal aus. Das Ultraschallsignal wird an dem Objekt 30 reflektiert und es werden reflektierte Ultraschallsignale von dem Ultraschallsensor 12 erfasst. Das zeitlich zuerst erfasste Ultraschallsignal entspricht dem Reflex von der oberen Kante 34 des Objekts 30'. Der Punkt 34 weist hier die kürzeste Distanz $d_2$ zu dem Ultraschallsensor 12 auf, auch wenn er dem Ultraschallsensor 12 nicht wie im Beispiel nach Fig. 2 a) direkt gegenüberliegt. Daraus folgt, dass das von diesem Punkt 34 ausgehende reflektierte Ultraschallsignal die kürzeste Laufzeit der erfassten reflektierten Ultraschallsignale aufweist. Dieses Ultraschallsignal wird auch als Kantenreflex bezeichnet.

Auch hier kann wiederrum aus geometrischen Überlegungen und ausgehend von dem Erfassungszeitpunkt des Kantenreflexes 15 ein Erwartungsfenster für die Erfassung des Kehlenreflexes aus dem Kehlenbereich 33 im Abstand $d_1$ berechnet werden. Wird innerhalb dieses Erwartungsfensters tatsächlich ein zweites Ultraschallsignal empfangen, so kann dieses mit dem ersten Ultraschallsignal zu einer Signalgruppe zusammengefasst werden.

Figur 3 zeigt schematisch die in fünf aufeinanderfolgenden Messzyklen 21, 22, 23, 24 und 25 erfassten ersten Ultraschallsignale 13 und zweiten Ultraschallsignale 14. Hierbei ist auf der x-Achse die Zeit aufgetragen und auf der y-Achse die aus der jeweiligen Echolaufzeit berechnete Distanz d. In jedem der Messzyklen 21, 22, 23, 24 und 25 wurde ein erstes Ultraschallsignal 13 und ein zweites Ultraschallsignal 14 empfangen. Die den Ultraschallsignalen 13, 14 entsprechenden Distanzen nehmen für aufeinanderfolgende Messzyklen ab, was bedeutet, dass sich der erfassende Ultraschallsensor 12 während der Messung auf das reflektierende Objekt 30 zubewegt hat. Weiterhin ist für jeden Messzyklus 21, 22, 23, 24 und 25 das ausgehend von dem ersten erfassten Ultraschallsignal 13 berechnete Erwartungsfenster 41, 42, 43, 44 und 45 dargestellt. Dabei wird die jeweilige untere Distanzgrenze 40' eines Erwartungsfensters 41, 42, 43, 44 und 45 aus einer Mindestobjekthöhe s errechnet und die obere Distanzgrenze 40" des jeweiligen Erwartungsfensters wird aus der Annahme eines Objekts mit einer Höhe H größer als Sensoreinbauhöhe h berechnet. Beide Grenzwerte werden bevorzugt aufgrund von potentiell auftretenden Messfehlern mit einer Toleranz $tol_{max}$ für die obere Distanzgrenze 40" bzw. einer Toleranz $tol_{min}$ für die untere Distanzgrenze 40' berechnet.

Im Fahrzeug ändert sich die tatsächliche Sensoreinbauhöhe h abhängig vom Beladungszustand des Fahrzeugs. Ist das Fahrzeug leer ("untoaded"), kann sich eine höhere Sensoreinbauhöhe $h_{unloaded}$ ergeben als im beladenen Zustand ("loaded"), bei dem sich eine kleinere Sensoreinbauhöhe $h_{loaded}$ ergibt. Typischerweise ändert sich die Sensoreinbauhöhe h um ca. 5 bis 10cm abhängig vom Fahrzeugtyp. Bei der Berechnung der oberen und unteren Distanzgrenzen 40' und 40" kann dieser Effekt berücksichtigt werden, beispielsweise indem beide Höhen verwenden, $h_{unloaded}$ für die obere Distanzgrenze 40", um einen größeren Wert zu erhalten und $h_{loaded}$ für die untere Distanzgrenze 40', um einen kleineren Wert zu erhalten.

Die Berechnung der oberen Distanzgrenze 40" kann demnach beispielsweise mittels der folgenden Vorschrift erfolgen:

$$d_{1,max} = \sqrt{h_{unloaded}^2 + d_{2,ref}^2}$$

$$obere\ Distanzgrenze = d_{1,max} - d_{2,ref} + tol_{max}$$

Die Berechnung der unteren Distanzgrenze 40' kann beispielsweise mittels der folgenden Vorschrift erfolgen:

$$d_{1,min} = \sqrt{h_{loaded}^2 + d_{2,ref}^2 - (h_{loaded} - s)^2}$$

$$untere\ Distanzgrenze = d_{1,min} - d_{2.ref} - tol_{min}$$

Wobei $d_{2,ref}$ jeweils der Direktechodistanz, also dem Abstand zu dem dem Ultraschallsensor 12 direkt gegenüberliegenden Punkt 32 entspricht.

In jedem der Messzyklen 21, 22, 23, 24 und 25 wird ein zweites Ultraschallsignal 14 innerhalb des jeweiligen Messfensters 41, 42, 43, 44 und 45 erfasst. Für jeden Messzyklus 21, 22, 23, 24 und 25 kann daher eine Signalgruppe aus den erfassten Ultraschallsignalen 13 und 14 gebildet werden. Durch Bestimmung einer Signifikanz für jedes der Ultraschallsignale 13 und 14, wie in Bezug auf Figur 1 dargestellt und anschließendem Vergleich der Signifikanzen, kann jede Signalgruppe einer ersten oder einer zweiten Echogruppe zugeordnet werden. Es kann nun jeweils eine Rate für die erste Echogruppe und die zweite Echogruppe über die Messzyklen berechnet werden. Die Raten können mit festgelegten ersten und zweiten Schwellenwerten verglichen werden, um eine Bewertung der Höhe des Objekts 30 durchzuführen. Zusätzlich kann auch die Summe der ersten Rate und der zweiten Rate mit einem dritten Schwellenwert verglichen werden. In einer möglichen Ausführung der Erfindung ist beispielsweise der erste Schwellenwert $s_1$ (für die erste Rate der ersten Echogruppe) mit $s_1 = 40\%$ festgelegt. Der zweite Schwellenwert $s_2$ (für die zweite Rate der zweiten Echogruppe) ist in diesem Beispiel ebenfalls $s_2 = 40\%$ festgelegt. Der dritte Schwellenwert $s_3$ für die Summe aus der ersten Rate und der zweiten Rate ist mit $s_3 = 60\%$ festgelegt.

Ergibt die Messung nun eine erste Rate von 35% und eine zweite Rate von 30%, so sind zwar der erste Schwellenwert $s_1$ und der zweite Schwellenwert $s_2$ nicht überschritten, Jedoch die Summe der Raten von 65% überschreitet den dritten Schwellenwert $s_3$, so dass die Höhe des Objekts 30 als nicht überfahrbar bewertet wird.

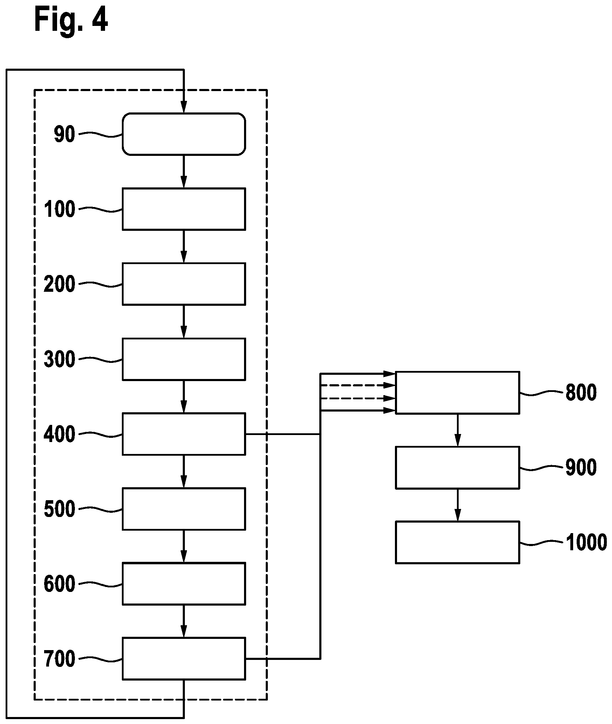

In Figur 4 ist ein Verfahren gemäß einem Ausführungsbeispiel der Erfindung in Form eines Ablaufdiagrammes dargestellt.

In Schritt 90 wird ein Messzyklus gestartet. Dabei wird beispielsweise von einem an einem Fahrzeug angeordneten Ultraschallsensor ein Ultraschallsignal in die Umgebung des Fahrzeugs abgegeben.

In Schritt 100 wir ein erstes Ultraschallsignal als Kantenreflex oder als Direktläuferecho eines hohen Objekts erfasst.

in Schritt 200 wird basierend auf dem erfassten ersten Ultraschallsignal ein Erwartungsfenster für einen zugehörigen Kehlenreflex berechnet.

in Schritt 300 wird ein zweites Ultraschallsignal erfasst.

In Schritt 400 wird geprüft, ob das zweite Ultraschallsignal in dem Erwartungsfenster erfasst worden ist. Wenn ja, wir das zweite Ultraschallsignal als zu dem ersten Ultraschallsignal zugehöriger Kehlenreflex identifiziert und das erste Ultraschallsignal und das zweite Ultraschallsignal werden zu einer Signalgruppe zusammengefasst. Falls nein, wird dieses Ergebnis ausgegeben.

In Schritt 500 wird eine erste Signifikanz des ersten Ultraschallsignals bestimmt und eine zweiten Signifikanz des zweiten Ultraschallsignals bestimmt, wobei die Signifikanz jedes erfassten Ultraschallsignals eine Wahrscheinlichkeit angibt, mit der das erfasste Ultraschallsignal eine Reflexion eines ausgesendeten Ultraschallsignals an wenigstens einem Objekt ist.

In Schritt 600 wird die Signalgruppe zu einem Objekt im Fahrzeugumfeld zugeordnet.

In Schritt 700 erfolgt ein Vergleich der ersten Signifikanz und der zweiten Signifikanz. Abhängig von dem Ergebnis des Vergleichs erfolgt die Zuordnung der Signalgruppe zu einer ersten Echogruppe oder einer zweiten Echogruppe. Das Ergebnis der Zuordnung wird ausgegeben. Dann beginnt ein neuer Messzyklus.

Ergebnisse der Zuordnung von erkannten Signalgruppen, werden über eine Mehrzahl von Messzyklen erfasst.

In Schritt 800 wird für die jeweils letzten 16 Messzyklen eine erste Rate für die Zuordnung von erkannten Signalgruppen zur ersten Echogruppe sowie eine zweite Rate für die Zuordnung von erkannten Signalgruppen zur zweiten Echogruppe bestimmt. Dabei werden alle Messzyklen gezählt, auch die in denen beispielsweise kein zweites Ultraschallsignal im Erwartungsfenster erfasst wurde oder wenn keine gültige Signifikanz eines Ultraschallsignals bestimmt werden konnte.

In Schritt 900 wird die erste Rate der Zuordnung eines Signalgruppe zu der ersten Echogruppe mit einem ersten Schwellenwert $s_1$ verglichen wird und die zweite Rate der Zuordnung eines Signalgruppe zu der zweiten Echogruppe wird mit einem zweiten Schwellenwert $s_2$ verglichen. Außerdem wird die Summe der ersten Rate und der zweiten Rate mit einem dritten Schwellenwert $s_3$ verglichen, wobei der dritte Schwellenwert insbesondere größer ist, als die beiden Schwellenwerte $s_1$ und $s_2$.

In Schritt 1000 erfolgt eine Bewertung der Höhe des Objekts basierend auf dem Vergleich. Insbesondere kann ein Objekt als nicht überfahrbar bewertet werden, wenn mindestens einer der Schwellenwerte $s_1$, $s_2$ oder $s_3$ überschritten wurde.

## Patentansprüche

1. Verfahren zum Bewerten einer Objekthöhe (H) mittels von einem an einem Fahrzeug angeordneten Ultraschallsensor (12) erfassten Ultraschallsignalen, **gekennzeichnet durch** die Schritte

   • in einem Messzyklus:

   a. Erfassen eines ersten Ultraschallsignals (13) als Kantenreflex oder als Direktläuferecho eines Objekts (30);
   b. Berechnen eines Erwartungsfensters für einen zugehörigen Kehlenreflex, wobei das Berechnen des Erwartungsfensters basierend auf einer Laufzeit des ersten Ultraschallsignals (13), der Einbauhöhe (h) des Ultraschallsensors und einem Höhenschwellwert (S) erfolgt;
   c. Erfassen eines zweiten Ultraschallsignals;
   d. wenn das zweite Ultraschallsignal (14) in dem Erwartungsfenster erfasst wird, Identifikation des zweiten Ultraschallsignals (14) als zu dem ersten Ultraschallsignal (13) zugehörigen Kehlenreflex und Zusammenfassen des ersten Ultraschallsignals (13) und des zweiten Ultraschallsignals (14) zu einer Signalgruppe;
   e. Bestimmen einer ersten Signifikanz des ersten Ultraschallsignals (13) und Bestimmen einer zweiten Signifikanz des zweiten Ultraschallsignals (14), wobei die Signifikanz jedes erfassten Ultraschallsignals (13, 14) eine Wahrscheinlichkeit angibt, mit der das erfasste Ultraschallsignal (13, 14) eine Reflexion eines ausgesendeten Ultraschallsignals an wenigstens einem Objekt ist;
   f. Zuordnung der Signalgruppe zu einem Objekt (30) im Fahrzeugumfeld;
   g. Vergleich der ersten Signifikanz und der zweiten Signifikanz und abhängig von dem Vergleich Zuordnung der Signalgruppe zu einer ersten Echogruppe oder einer zweiten Echogruppe;

   • Bestimmen einer ersten Rate der Zuordnung einer Signalgruppe zu der ersten Echogruppe über eine bestimmte Anzahl von Messzyklen (21, 22, 23, 24, 25);
   • Bestimmen einer zweiten Rate der Zuordnung einer Signalgruppe zu der zweiten Echogruppe über die bestimmte Anzahl von Messzyklen (21, 22, 23, 24, 25);
   • Abhängig von der ersten Rate und der zweiten Rate Bewerten der Objekthöhe (H) dahingehend, ob das Objekt von dem Fahrzeug gefahrlos überfahren werden kann oder nicht.

2. Verfahren nach einem der Ansprüche 1, **dadurch gekennzeichnet, dass** eine Signifikanz des ersten Ultraschallsignals (13) und eine Signifikanz des zweiten Ultraschallsignals (14) bestimmt wird, anhand wenigstens eines Parameters (A, R), der Informationen umfasst, die in einem Empfangssignal (ES) enthalten sind, insbesondere einer Amplitude (A) und/oder einem Korrelationsfaktor (R), wobei das Empfangssignal von dem Ultraschallsensor (12) aus von diesem während des Messzyklus empfangenen Ultraschallsignalen erzeugt wird und wobei die Signifikanz bestimmt wird durch:
Einteilen eines Raumbereiches, der sich von dem Ultraschallsensor bis zu einer maximalen Reichweite des Ultraschallsensors erstreckt, in mehrere kontinuierliche und aufeinander folgende Teilbereiche (T1, T2, T3), und Auswählen des wenigstens einen zum Bewerten der Signifikanz jedes empfangenen Ultraschallsignals zu verwendenden Parameters (A, R) aus einer vordefinierten Parametergruppe in Abhängigkeit von einer Positionierung des Teilbereichs (T1, T2, T3), in dem das entsprechende Ultraschallsignal entstanden ist.

3.  Verfahren nach einem der Ansprüche 1 bis 2, **dadurch gekennzeichnet, dass** die Signifikanz jedes empfangenen Ultraschallsignals mittels einer Signifikanzskala mit mehreren diskreten Signifikanzstufen bewertet wird, wobei das Bestimmen der Signifikanz des ersten Ultraschallsignals und/oder der Signifikanz des zweiten Ultraschallsignals erfolgt, indem dem Ultraschallsignal eine bestimmte Signifikanzstufe zugeordnet wird.

4.  Verfahren nach Anspruch 3, **dadurch gekennzeichnet, dass** vier Signifikanzstufen vorgesehen sind, die eine erste Signifikanzstufe "niedrig", eine zweite Signifikanzstufe "mittel", eine dritte Signifikanzstufe "hoch" und eine vierte Signifikanzstufe "sehr hoch" umfassen, wobei der Signifikanzstufe "niedrig" eine Wahrscheinlichkeit von 30 bis 50 % entspricht, dass ein Ultraschallsignal (13, 14) aus einer Reflexion eines ausgesendeten Ultraschallsignals an wenigstens einem Objekt (30) stammt, wobei der Signifikanzstufe "mittel" eine Wahrscheinlichkeit von 51 bis 70% entspricht, dass ein Ultraschallsignal (13, 14) aus einer Reflexion eines ausgesendeten Ultraschallsignals an wenigstens einem Objekt (30) stammt, wobei der Signifikanzstufe "hoch" eine Wahrscheinlichkeit von 71 bis 90% entspricht, dass ein Ultraschallsignal aus einer Reflexion eines ausgesendeten Ultraschallsignals (13, 14) an wenigstens einem Objekt (30) stammt, und wobei der Signifikanzstufe "sehr hoch" eine Wahrscheinlichkeit von 91 bis 100% entspricht, dass ein Ultraschallsignal (13, 14) aus einer Reflexion eines ausgesendeten Ultraschallsignals an wenigstens einem Objekt (30) stammt.

5.  Verfahren nach einem der Ansprüche 1 bis 4, **dadurch gekennzeichnet, dass** eine Signalgruppe umfassend ein erstes Ultraschallsignal (13) und ein zweites Ultraschallsignal (14) einer ersten Echogruppe zugeordnet wird, wenn der Unterschied zwischen der ersten Signifikanz und der zweiten Signifikanz einen vorbestimmten Schwellenwert unterschreitet, insbesondere, wenn beide Ultraschallsignale dieselbe Signifikanzstufe aufweisen, oder wenn das erste Ultraschallsignal eine eine Signifikanzstufe "sehr hoch" aufweist, wobei der Signifikanzstufe "sehr hoch" eine Wahrscheinlichkeit von 91 bis 100% entspricht, dass ein Ultraschallsignal (13, 14) aus einer Reflexion eines ausgesendeten Ultraschallsignals an wenigstens einem Objekt (30) stammt.

6.  Verfahren nach einem der Ansprüche 1 bis 5, **dadurch gekennzeichnet, dass** eine Signalgruppe umfassend ein erstes Ultraschallsignal (13) und ein zweites Ultraschallsignal (14) einer zweiten Echogruppe zugeordnet wird, wenn das erste Ultraschallsignal eine Signifikanzstufe "niedrig" aufweist, wobei der Signifikanzstufe "niedrig" eine Wahrscheinlichkeit von 30 bis 50 % entspricht, dass ein Ultraschallsignal (13, 14) aus einer Reflexion eines ausgesendeten Ultraschallsignals an wenigstens einem Objekt (30) stammt, und das zweite Ultraschallsignal eine im Vergleich zum ersten Ultraschallsignal eine Signifikanzstufe "hoch" oder "sehr hoch" aufweist, wobei der Signifikanzstufe "hoch" eine Wahrscheinlichkeit von 71 bis 90% entspricht, dass ein Ultraschallsignal aus einer Reflexion eines ausgesendeten Ultraschallsignals (13, 14) an wenigstens einem Objekt (30) stammt, und wobei der Signifikanzstufe "sehr hoch" eine Wahrscheinlichkeit von 91 bis 100% entspricht, dass ein Ultraschallsignal (13, 14) aus einer Reflexion eines ausgesendeten Ultraschallsignals an wenigstens einem Objekt (30) stammt.

7.  Verfahren nach einem der Ansprüche 1 bis 6, **dadurch gekennzeichnet, dass** die Zuordnung der Signalgruppe zu einem Objekt (30) im Fahrzeugumfeld durch Trilateration erfolgt.

8.  Verfahren nach einem der Ansprüche 1 bis 7, **dadurch gekennzeichnet, dass** das Bewerten der Objekthöhe (H) erfolgt, indem die bestimmte erste Rate der Zuordnung einer Signalgruppe zu der ersten Echogruppe mit einem ersten Schwellenwert verglichen wird und/oder die bestimmte zweite Rate der Zuordnung einer Signalgruppe zu der zweiten Echogruppe mit einem zweiten Schwellenwert verglichen wird und/oder die Summe der ersten Rate und der zweiten Rate mit einem dritten Schwellenwert verglichen wird.

9.  Verfahren nach Anspruch 8, **dadurch gekennzeichnet, dass** der dritte Schwellenwert größer ist als der ersten Schwellenwert und dass der dritte Schwellenwert größer ist als der zweite Schwellenwert.

**10.** Verfahren nach einem der Ansprüche 1 bis 9, **dadurch gekennzeichnet, dass** ein von der ersten Rate und der zweiten Rate abhängiges Bewerten der Objekthöhe (H) nur erfolgt, wenn sich das Fahrzeug bewegt oder dass bei Stillstand des Fahrzeugs höhere Bewertungsschwellwerte bei der Bewertung angesetzt werden.

**11.** Ultraschallsensorsystem für ein Fahrzeug umfassend

• mindestens einen Ultraschallsensor (12), der ausgebildet ist, Ultraschallsignale auszusenden und an einem Objekt (30) reflektierte Ultraschallsignale (13, 14) der ausgesendeten Ultraschallsignale zu erfassen,
• eine Recheneinheit, die ausgebildet ist, ein Verfahren zum Bewerten einer Objekthöhe (H) des Objekts (30) mittels der von dem Ultraschallsensor (12) erfassten Ultraschallsignale nach einem der Ansprüche 1 bis 10 durchzuführen.

**12.** Computerprogramm, umfassend Programmcode zur Durchführung des Verfahrens nach einem der Ansprüche 1 bis 10, wenn das Computerprogramm auf der Recheneinheit des Ultraschallsensorsystems gemäß Anspruch 11 ausgeführt wird.

**Claims**

**1.** Method for evaluating an object height (H) by means of ultrasonic signals detected by an ultrasonic sensor (12) arranged on a vehicle, **characterized by** the steps of

• in a measurement cycle:

a. detecting a first ultrasonic signal (13) as an edge reflection or as a direct-path echo of an object (30);
b. calculating an expected window for an associated object-ground interface reflection, wherein the expected window is calculated based on a delay time of the first ultrasonic signal (13), the installation height (h) of the ultrasonic sensor and a height threshold value (S);
c. detecting a second ultrasonic signal;
d. if the second ultrasonic signal (14) is detected in the expected window, identifying the second ultrasonic signal (14) as the object-ground interface reflection associated with the first ultrasonic signal (13) and combining the first ultrasonic signal (13) and the second ultrasonic signal (14) in one signal group;
e. determining a first significance of the first ultrasonic signal (13) and determining a second significance of the second ultrasonic signal (14),
wherein the significance of each detected ultrasonic signal (13, 14) indicates a probability that the detected ultrasonic signal (13, 14) is a reflection of an emitted ultrasonic signal at at least one object;
f. assigning the signal group to an object (30) in the vehicle environment;
g. comparing the first significance with the second significance and, depending on the comparison, assigning the signal group to a first echo group or to a second echo group;

• determining a first rate of the assignment of a signal group to the first echo group over a particular number of measurement cycles (21, 22, 23, 24, 25);
• determining a second rate of the assignment of a signal group to the second echo group over the particular number of measurement cycles (21, 22, 23, 24, 25);
• depending on the first rate and the second rate, evaluating the object height (H) to determine whether the object can or cannot be driven over safely by the vehicle.

**2.** Method according to Claim 1, **characterized in that** a significance of the first ultrasonic signal (13) and a significance of the second ultrasonic signal (14) is determined on the basis of at least one parameter (A, R) which comprises information contained in a received signal (ES), in particular an amplitude (A) and/or a correlation factor (R), wherein the received signal is generated by the ultrasonic sensor (12) from ultrasonic signals received thereby during the measurement cycle and wherein the significance is determined by:
dividing a spatial region, which extends from the ultrasonic sensor to a maximum range of the ultrasonic sensor, into a plurality of continuous and successive sub-regions (T1, T2, T3), and selecting the at least one parameter (A, R) to be used for evaluating the significance of each received ultrasonic signal from a predefined parameter group depending on a positioning of the subregion (T1, T2, T3) in which the corresponding ultrasonic signal originated.

**3.** Method according to either of Claims 1 to 2, **characterized in that** the significance of each received ultrasonic signal is evaluated using a significance scale having a plurality of discrete significance levels, wherein the significance of the first ultrasonic signal and/or the significance of the second ultrasonic signal is determined by assigning a particular significance level to the ultrasonic signal.

4. Method according to Claim 3, **characterized in that** four significance levels are provided, which comprise a first "low" significance level, a second "medium" significance level, a third "high" significance level and a fourth "very high" significance level, wherein the "low" significance level corresponds to a probability of 30 to 50% that an ultrasonic signal (13, 14) comes from a reflection of an emitted ultrasonic signal at at least one object (30), wherein the "medium" significance level corresponds to a probability of 51 to 70% that an ultrasonic signal (13, 14) comes from a reflection of an emitted ultrasonic signal at at least one object (30), wherein the "high" significance level corresponds to a probability of 71 to 90% that an ultrasonic signal comes from a reflection of an emitted ultrasonic signal (13, 14) at at least one object (30), and wherein the "very high" significance level corresponds to a probability of 91 to 100% that an ultrasonic signal (13, 14) comes from a reflection of an emitted ultrasonic signal at at least one object (30).

5. Method according to one of Claims 1 to 4, **characterized in that** a signal group comprising a first ultrasonic signal (13) and a second ultrasonic signal (14) is assigned to a first echo group if the difference between the first significance and the second significance falls below a predetermined threshold value, in particular if both ultrasonic signals have the same significance level, or if the first ultrasonic signal has a "very high" significance level, wherein the "very high" significance level corresponds to a probability of 91 to 100% that an ultrasonic signal (13, 14) comes from a reflection of an emitted ultrasonic signal at at least one object (30).

6. Method according to one of Claims 1 to 5, **characterized in that** a signal group comprising a first ultrasonic signal (13) and a second ultrasonic signal (14) is assigned to a second echo group if the first ultrasonic signal has a "low" significance level, wherein the "low" significance level corresponds to a probability of 30 to 50% that an ultrasonic signal (13, 14) comes from a reflection of an emitted ultrasonic signal at at least one object (30), and the second ultrasonic signal has a "high" or "very high" significance level in comparison with the first ultrasonic signal, wherein the "high" significance level corresponds to a probability of 71 to 90% that an ultrasonic signal comes from a reflection of an emitted ultrasonic signal (13, 14) at at least one object (30), and wherein the "very high" significance level corresponds to a probability of 91 to 100% that an ultrasonic signal (13, 14) comes from a reflection of an emitted ultrasonic signal at at least one object (30).

7. Method according to one of Claims 1 to 6, **characterized in that** the signal group is assigned to an object (30) in the vehicle environment by trilateration.

8. Method according to one of Claims 1 to 7, **characterized in that** the object height (H) is evaluated by comparing the determined first rate of the assignment of a signal group to the first echo group with a first threshold value and/or comparing the determined second rate of the assignment of a signal group to the second echo group with a second threshold value and/or comparing the sum of the first rate and the second rate with a third threshold value.

9. Method according to Claim 8, **characterized in that** the third threshold value is greater than the first threshold value and **in that** the third threshold value is greater than the second threshold value.

10. Method according to one of Claims 1 to 9, **characterized in that** the object height (H) is evaluated depending on the first rate and the second rate only if the vehicle moves or **in that** higher evaluation threshold values are applied during the evaluation when the vehicle is stationary.

11. Ultrasonic sensor system for a vehicle. comprising

  • at least one ultrasonic sensor (12) which is designed to emit ultrasonic signals and to detect ultrasonic signals (13, 14) of the emitted ultrasonic signals reflected at an object (30),
  • a computing unit which is designed to carry out a method for evaluating an object height (H) of the object (30) by means of the ultrasonic signals detected by the ultrasonic sensor (12) according to one of Claims 1 to 10.

12. Computer program, comprising program code for carrying out the method according to one of Claims 1 to 10 when the computer program is executed on the computing unit of the ultrasonic sensor system according to Claim 11.

**Revendications**

1. Procédé permettant d'évaluer une hauteur d'objet (H) au moyen de signaux ultrasonores détectés par un capteur à ultrasons (12) disposé sur un véhicule, **caractérisé par** les étapes consistant à :

   • dans un cycle de mesure :

      a) détecter un premier signal ultrasonore (13) comme une réflexion sur le bord ou un écho direct d'un objet (30) ;
      b) calculer une fenêtre d'attente pour une réflexion sur cannelure associée, le calcul de la fenêtre d'attente étant effectué sur la base d'un temps de propagation du premier signal ultrasonore (13), de la hauteur d'installation (h) du capteur à ultrasons et d'une valeur seuil de hauteur (S) ;
      c) détecter un deuxième signal ultrasonore ;
      d) lorsque le deuxième signal ultrasonore (14) est détecté dans la fenêtre d'attente, identifier le deuxième signal ultrasonore (14) comme une réflexion sur cannelure associée au premier signal ultrasonore (13) et regrouper le premier signal ultrasonore (13) et le deuxième signal ultrasonore (14) en un groupe de signaux ;
      e) déterminer une première signification du premier signal ultrasonore (13) et déterminer une deuxième signification du deuxième signal ultrasonore (14),
      dans lequel la signification de chaque signal ultrasonore (13, 14) détecté indique une probabilité avec laquelle le signal ultrasonore (13, 14) détecté est une réflexion d'un signal ultrasonore émis sur au moins un objet ;
      f) attribuer le groupe de signaux à un objet (30) dans l'environnement du véhicule ;
      g) comparer la première signification et la deuxième signification et en fonction de la comparaison, attribuer le groupe de signaux à un premier groupe d'échos ou à un deuxième groupe d'échos ;

   • déterminer un premier taux de l'attribution d'un groupe de signaux au premier groupe d'échos pendant un nombre déterminé de cycles de mesure (21, 22, 23, 24, 25) ;
   • déterminer un deuxième taux de l'attribution d'un groupe de signaux au deuxième groupe d'échos pendant le nombre déterminé de cycles de mesure (21, 22, 23, 24, 25) ;
   • en fonction du premier taux et du deuxième taux, évaluer la hauteur d'objet (H) pour savoir si le véhicule peut passer sur l'objet sans danger ou non.

2. Procédé selon la revendication 1, **caractérisé en ce qu'**une signification du premier signal ultrasonore (13) et une signification du deuxième signal ultrasonore (14) sont déterminées à l'aide d'au moins un paramètre (A, R) comprenant des informations qui sont contenues dans un signal de réception (ES), en particulier à l'aide d'une amplitude (A) et/ou d'un facteur de corrélation (R), dans lequel le signal de réception est généré par le capteur à ultrasons (12) à partir de signaux ultrasonores reçus par celui-ci pendant le cycle de mesure, et dans lequel la signification est déterminée par les étapes consistant à :
   diviser une zone spatiale qui s'étend du capteur à ultrasons jusqu'à une portée maximale du capteur à ultrasons en plusieurs zones partielles (T1, T2, T3) continues et consécutives, et sélectionner ledit au moins un paramètre (A, R) d'un groupe de paramètres prédéfinis, à utiliser pour évaluer la signification de chaque signal ultrasonore reçu, en fonction d'un positionnement de la zone partielle (T1, T2, T3) dans laquelle le signal ultrasonore correspondant est apparu.

3. Procédé selon l'une quelconque des revendications 1 à 2, **caractérisé en ce que** la signification de chaque signal ultrasonore reçu est évaluée au moyen d'une échelle de signification avec plusieurs niveaux de signification discrets, dans lequel la détermination de la signification du premier signal ultrasonore et/ou de la signification du deuxième signal ultrasonore est effectuée en attribuant un niveau de signification déterminé au signal ultrasonore.

4. Procédé selon la revendication 3, **caractérisé en ce que** quatre niveaux de signification sont prévus qui comprennent un premier niveau de signification « faible », un deuxième niveau de signification « moyen », un troisième niveau de signification « élevé » et un quatrième niveau de signification « très élevé », dans lequel le niveau de signification « faible » correspond à une probabilité de 30 à 50 % qu'un signal ultrasonore (13, 14) résulte d'une réflexion d'un signal ultrasonore émis sur au moins un objet (30), dans lequel le niveau de signification « moyen » correspond à une probabilité de 51 à 70 % qu'un signal ultrasonore (13, 14) résulte d'une réflexion d'un signal ultrasonore émis sur au moins un objet (30), dans lequel le niveau de signification « élevé » correspond à une probabilité de 71 à 90 % qu'un signal ultrasonore résulte d'une réflexion d'un signal ultrasonore (13, 14) émis sur au moins un objet (30), et dans lequel le niveau de signification « très élevé » correspond à une probabilité de 91 à 100 % qu'un signal ultrasonore (13, 14) résulte d'une réflexion d'un signal ultrasonore émis sur au moins un objet (30).

5. Procédé selon l'une quelconque des revendications 1 à 4, **caractérisé en ce qu'**un groupe de signaux comprenant un premier signal ultrasonore (13) et un deuxième signal ultrasonore (14) est attribué à un premier groupe d'échos lorsque la différence entre la première signification et la deuxième signification est inférieure à une valeur seuil prédéterminée, en particulier lorsque les deux signaux ultrasonores présentent le même niveau de signification ou lorsque le premier signal ultrasonore présente un niveau de signification « très élevé », dans lequel le niveau de signification « très élevé » correspond à une probabilité de 91 à 100 % qu'un signal ultrasonore (13, 14) résulte d'une réflexion d'un signal ultrasonore émis sur au moins un objet (30).

6. Procédé selon l'une quelconque des revendications 1 à 5, **caractérisé en ce qu'**un groupe de signaux comprenant un premier signal ultrasonore (13) et un deuxième signal ultrasonore (14) est attribué à un deuxième groupe d'échos lorsque le premier signal ultrasonore présente un niveau de signification « faible », dans lequel le niveau de signification « faible » correspond à une probabilité de 30 à 50 % qu'un signal ultrasonore (13, 14) résulte d'une réflexion d'un signal ultrasonore émis sur au moins un objet (30), et le deuxième signal ultrasonore présente en comparaison avec le premier signal ultrasonore un niveau de signification « élevé » ou « très élevé », dans lequel le niveau de signification « élevé » correspond à une probabilité de 71 à 90 % qu'un signal ultrasonore résulte d'une réflexion d'un signal ultrasonore (13, 14) émis sur au moins un objet (30), et dans lequel le niveau de signification « très élevé » correspond à une probabilité de 91 à 100 % qu'un signal ultrasonore (13, 14) résulte d'une réflexion d'un signal ultrasonore émis sur au moins un objet (30).

7. Procédé selon l'une quelconque des revendications 1 à 6, **caractérisé en ce que** l'attribution du groupe de signaux à un objet (30) dans l'environnement du véhicule est effectuée par trilatération.

8. Procédé selon l'une quelconque des revendications 1 à 7, **caractérisé en ce que** l'évaluation de la hauteur d'objet (H) est effectuée **en ce que** le premier taux déterminé de l'attribution d'un groupe de signaux au premier groupe d'échos est comparé avec une première valeur seuil, et/ou le deuxième taux déterminé de l'attribution d'un groupe de signaux au deuxième groupe d'échos est comparé avec une deuxième valeur seuil, et/ou la somme du premier taux et du deuxième taux est comparée avec une troisième valeur seuil.

9. Procédé selon la revendication 8, **caractérisé en ce que** la troisième valeur seuil est supérieure à la première valeur seuil, et **en ce que** la troisième valeur seuil est supérieure à la deuxième valeur seuil.

10. Procédé selon l'une quelconque des revendications 1 à 9, **caractérisé en ce qu'**une évaluation de la hauteur d'objet (H) dépendant du premier taux et du deuxième taux n'est effectuée que si le véhicule roule, ou **en ce qu'**en cas d'arrêt du véhicule des valeurs seuil d'évaluation plus élevées sont prévues pour l'évaluation.

11. Système de capteur à ultrasons pour un véhicule, comprenant

  • au moins un capteur à ultrasons (12) qui est réalisé pour émettre des signaux ultrasonores et pour détecter des signaux ultrasonores (13, 14) réfléchis sur un objet (30) parmi les signaux ultrasonores émis,
  • une unité de calcul qui est réalisée pour exécuter un procédé permettant d'évaluer une hauteur d'objet (H) de l'objet (30) au moyen des signaux ultrasonores détectés par le capteur à ultrasons (12), selon l'une quelconque des revendications 1 à 10.

12. Programme informatique, comprenant du code programme pour exécuter le procédé selon l'une quelconque des revendications 1 à 10 lorsque le programme informatique est exécuté sur l'unité de calcul du système de capteur à ultrasons selon la revendication 11.

# Fig. 1

EP 3 956 681 B1

# Fig. 2

a)

b)

# Fig. 3

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012211293 A1
- DE 102015209939 A1

- EP 1764630 A1